(19) Europäisches Patentamt
European Patent Office
Office européen des brevets

(11) **EP 0 368 930 B2**

(12) **NEW EUROPEAN PATENT SPECIFICATION**

(45) Date of publication and mention
of the opposition decision:
**13.01.1999 Bulletin 1999/02**

(45) Mention of the grant of the patent:
**06.04.1994 Bulletin 1994/14**

(21) Application number: **88907728.5**

(22) Date of filing: **12.09.1988**

(51) Int Cl.6: **H02K 29/10**, H02K 1/02,
H02K 23/58

(86) International application number:
**PCT/GB88/00742**

(87) International publication number:
**WO 89/02671 (23.03.1989 Gazette 1989/07)**

(54) **A MOTOR OR ALTERNATOR**

MOTOR ODER GENERATOR

MOTEUR OU ALTERNATEUR

(84) Designated Contracting States:
**AT BE CH DE FR GB IT LI LU NL SE**

(30) Priority: **15.09.1987 NZ 221822**
**26.01.1988 US 144386**

(43) Date of publication of application:
**23.05.1990 Bulletin 1990/21**

(73) Proprietor: **CADAC HOLDINGS LIMITED**
**Newmarket Auckland (NZ)**

(72) Inventor: **CLARK, Peter, Bruce**
**Warkworth (NZ)**

(74) Representative: **Dearing-Lambert, Peter Richard**
**Lewis & Taylor,**
**144 New Walk**
**Leicester LE1 7JA (GB)**

(56) References cited:

| | |
|---|---|
| EP-A- 0 096 468 | WO-A-88/02192 |
| DE-A-11 563 002 | DE-A-11 613 380 |
| DE-A-11 763 500 | DE-A-12 146 893 |
| DE-A-12 743 837 | DE-U-22 608 561 |
| FR-A- 2 267 650 | FR-A- 2 364 562 |
| FR-A- 2 577 355 | GB-A- 2 059 200 |
| US-A- 2 797 376 | US-A- 3 280 373 |
| US-A- 3 667 011 | US-A- 4 426 606 |

## Description

### FIELD

This invention relates to permanent magnet rotary dynamo electric machines of the type in which relative rotation occurs between a plurality of permanent magnetic poles and a plurality of wound poles. The wound poles being wound in the sense that they have associated therewith electric current carrying conductors. "Permanent magnetic poles" are generally provided by high strength permanent magnets formed of ceramic ferrites or rare earth magnets but they can also be provided by single or multi-turn closed loop(s) superconductors where the magnetic poles are permanent so long as the conductor is energised and remains in a superconducting state. The term "permanent magnet rotary dynamo electric machines" includes both motors and generators of direct or alternating current, and thus includes direct current generators as well as alternators.

### PRIOR ART

Electric motors and generators/alternators have traditionally been constructed in coaxial cylindrical formation with a central rotor having a plurality of wound poles formed by windings on steel laminations or on a soft iron core. The stator is a cylindrical casing surrounding the rotor, and requires accurate construction as there is only a narrow cylindrical gap between the rotor and stator of typically less than 0.25 mm for small machines, less than 5 kw. The stator also has a plurality of wound poles formed by windings in laminations inside a steel casing. Such silicon steel laminations generally have a high magnetic permeability of the order of 2000 (relative to air). Magnetic permeability of a material is conventionally expressed as a numerical value showing how many times it is greater than the magnetic permeability of air.

In the case of synchronous and universal motors the connections to the rotor are by way of a commutator and brushes or slip rings and brushes which are prone to wear. These traditional electric motors, and to a lesser extent alternators, suffer from problems arising from the use of iron in the wound poles in either the rotor, stator, or more typically both. The iron imposes a frequency limitation, typically a DC electric motor is limited to an internal operating frequency of no more than 500 hertz, because of the induced eddy current losses arising arising from the iron present.

For example the small high speed electric motors used in vacuum cleaners may run up to 30,000 rpm (ie 500 hertz) but are limited to operation of about one hour at a time because of eddy current heating problems associated with the iron laminations associated with the wound poles of both stator and rotor. In order to achieve these high speeds, within the frequency limitations imposed by the iron laminations they use only 2 brushes. If the number of brushes were increased there would be much greater losses, as well as greater complexity in the circuit used to control the motor.

Attempts have been made to build permanent magnet rotary dynamo electric machines of similar coaxial cylindrical configuration but using generally conventional constructional techniques so that there is a narrow air gap between permanent magnets on an outer stator and the wound poles are wound in the iron laminations of an internal rotor. The following US patents show examples of permanent magnet machines:

1,958,043 Heintz, 1934
2,104,707 Rawlings, 1938
3,296,471 Cochardt, 1967
3,531,670 Loudon, 1970
3,564,306 Ott, 1971
3,818,586 Harkness et al, 1974
4,303,843 Arnoux et al, 1981
4,417,167 Ishii et al, 1983
4,471,252 West, 1984
4,636,671 Terada, 1987
4,638,201 Feigel, 1987
4,651,066 Gritter et al, 1987

All of these patents show motors/alternators utilising permanent magnets of different configurations. The oldest patent shows a magneto, the Rawlings patent shows a bicycle generator, and the others show various motors/alternators, mostly with permanent magnets aligned with their axes parallel to the rotor shaft. The West patent shows a permanent magnet starter motor having a conventional laminated (iron) wound rotor and only 4 arcuate permanent magnets. This patent is concerned with shields for the permanent magnets positioned on the inside of the surrounding stator so as to prevent demagnetization of the corners of the magnet. The other U.S. patents listed above show motors having between 4 and 12 permanent magnets all having conventional laminated iron rotors with wound poles wound in slots in the laminations. These constructions all suffer from the same eddy current and hysteresis losses because of the need for iron laminations associated with the wound poles.

Another approach involves the use of permanent magnets and an ironless stator with a low effective coupling between them, to produce a motor exhibiting low torque. This approach is suitable for low power high speed DC motors.

One example of such a motor is described in GB 1500955 by Teldix. In the case of the Teldix motor the magnets are spaced apart from one another with resin in between them, so that by using a large number of small width bar magnets, the magnets in the external rotor correspond fairly closely to the radius of curvature of the inside of the rotor. Teldix suggests the use of 24 magnets grouped in such a way that there are only eight poles. These spaced apart magnetic poles create a low effective coupling between the flux lines and the windings as the Teldix windings intersect the flux lines at a shallow angle.

Another example of a motor having a low effective coupling is described in US 4,618,806 by Grouse. The Grouse patent shows a motor having a ring magnet and a zig zag or meandering winding on the stator. This meandering winding reduces the available torque to about 40% to that available from an axial winding.

OBJECT

It is an object of this invention to provide an improved permanent magnet rotary dynamo electric machine, or one which will at least provide the public with a useful choice.

STATEMENT OF INVENTION

In one aspect the invention provides a brushless permanent magnet rotary dynamo electric machine including: at least one generally cylindrical stator and at least one generally cylindrical rotor rotatable about an axis and having a generally cylindrical surface facing said generally cylindrical stator and spaced apart therefrom by a generally cylindrical gap, a plurality of permanent magnetic poles in the form of bands parallel to the rotational axis on said surface of the rotor and positioned adjacent said generally cylindrical gap, said stator having a plurality of wound poles on or in a substrate of the stator, the majority of said wound poles being positioned on or in that surface of the stator which faces said rotor so that the wound poles are adjacent said cylindrical gap and at least said majority of the wound poles being positioned substantially parallel to the rotational axis of the rotor, whereby at least the outer portion of the stator does not contain any ferromagnetic material, and the flux paths owing to said rotor magnetic poles extend in a region intersected by said majority of said wound poles, said region and the substrate of the stator having both a low relative magnetic permeability and being substantially non-conducting, so that the flux paths do not pass through any ferromagnetic material in the stator, <u>characterised in that</u> the permanent magnetic poles are closely spaced around the generally cylindrical circumference of the rotor surface such that the magnetic flux paths are relatively short substantially semi-circular magnetic flux paths between circumferentially adjacent permanent magnetic poles, whereby said majority of said wound poles intersect substantially all of the magnetic flux paths substantially at right angles thereto.

Preferably there are a relatively high number of poles on both the rotor and the stator of a rotor/stator pair so as to create a correspondingly short magnetic flux path between adjacent permanent magnetic poles. In most cases a single rotor/stator pair will suffice although this invention can be applied to multiple rotor/stator pairs. It is also preferred that the wound poles are of shallow depth and are wound on or close to the surface of the substrate. The substrate can be made of any material having a low magnetic permeability e.g. wood, fibreglass, plastics, plastics resins, or in some cases ferrites. Preferably the magnetic permeability of the substance is below 20 (relative to air). The wound poles could be wound on a removable mould and encapsulated within a plastics resin so that the resin forms the substrate.

Preferably the wound poles are provided on or close to the outer cylindrical surface of a stator so that the permanent magnetic poles are provided on the inner surface of a surrounding cup shaped rotor.

Alternatively, the rotor can be positioned within the stator, ie the positioning is reversed, in which case the permanent magnetic poles will be positioned on the outside of the rotor, and the wound poles will be on the inner cylindrical face of the stator.

Where the permanent magnetic poles are to be positioned on the inner face of a rotating outer cylinder, it would be generally convenient to use a plurality of high strength bar magnets such as ceramic or rare earth magnets, mounted adjacent one another with their axes parallel to the axis of the rotor. By mounting them on the inside of the rotor, it is possible to withstand greater rotational speeds than would be possible with the magnets on the outside surface of the rotor.

Nevertheless, it is possible to construct an electric motor or generator/alternator in accordance with this invention, with the magnets on the outer face of a rotor which is placed within a cylindrical stator. In such case, it would be generally convenient to use a single ceramic ring magnet, which is magnetized in such a way that the ring has regions of alternate polarity.

Preferably, the cylindrical gap between the rotor and stator is greater than that used with conventional electric motors or conventional generators/alternators which require the presence of iron within the stator in order to provide a magnetic flux path in the stator.

**DRAWINGS**

Other aspects of this invention, which should be considered in all its novel aspects, will become apparent from the following description, which is given by way of example only, with reference to the accompanying drawings in which:

Figure 1a: is a drive end view (with mounting plate removed) of a permanent magnet rotary dynamo electric machine showing the external rotor construction using bar magnets.
Figure 1b: is a section on line AA of Figure 1, (with mounting plate in position), showing the placement of the bar magnets in the outer rotor, and the relative position of the stator within the rotor.
Figure 2a: shows the drive end view of a permanent magnet rotary dynamo electric machine having an external rotor formed from a one piece ring magnet. (The stator construction has been omitted from this drawing.)
Figure 2b: is a section on line BB of Figure 2a, showing the construction of the rotor only.
Figure 3a: shows a flux diagram for a typical permanent magnet rotary dynamo electric machine of this invention.
Figure 3b: shows a voltage graph for a typical permanent magnet rotary dynamo electric machine of this invention.
Figure 4: shows a three phase winding construction for a typical permanent magnet rotary dynamo electric machine of this invention.
Figure 5a, 5b, 5c: show three segments of a circuit diagram for the operation of a three phase motor constructed in accordance with Figures 1a/1b using direct current supply.
Figure 6: is a block diagram for the motor operation of Figures 1a/1b using direct current supply.
Figure 7a: shows the drive end view (end cover removed) of a permanent magnet rotary dynamo electric machine showing an internal rotor construction using a cylinder magnet.
Figure 7b: shows a section on line CC of Figure 7a, in exploded view, of the end cover, internal rotor, and external stator.
Figure 8: shows the relationship of magnetic flux length to magnet size.

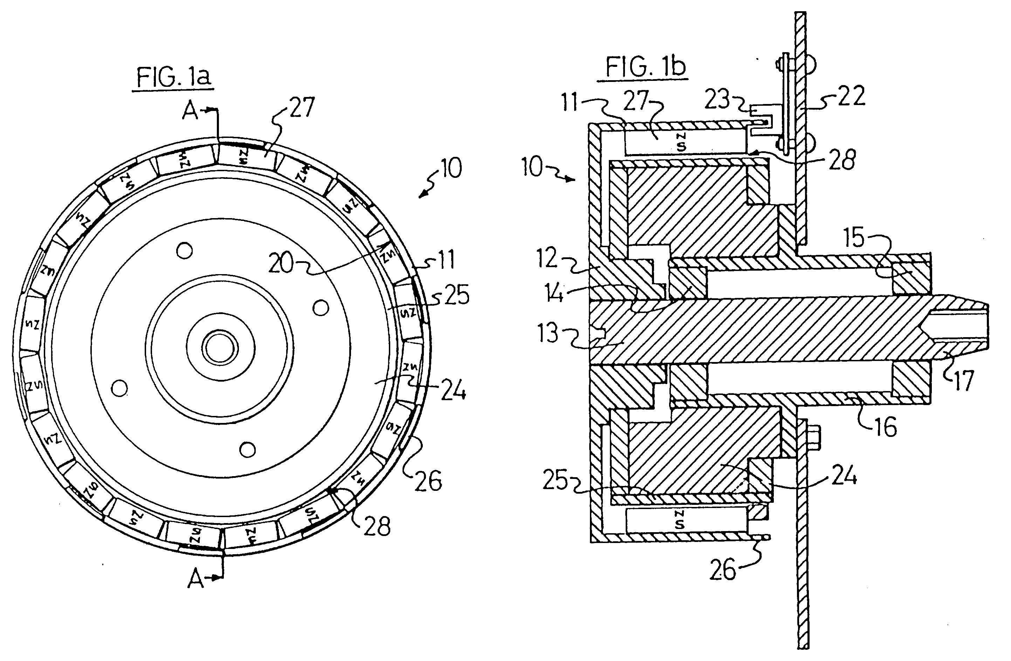

The motor/alternator of this invention is preferably constructed using a series of adjacent bar magnets inside a steel annulus to form the rotor as shown in figure 1a. The steel annulus provides two important functions:

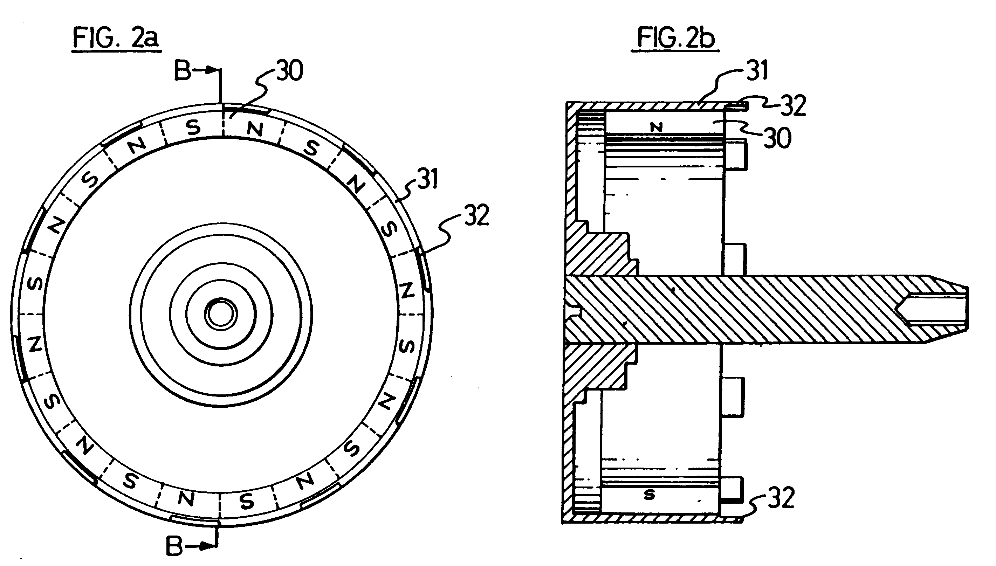

1. A mechanical support for the magnets against the high centrifugal forces encountered when the rotor is running at high rpm. It will be apparent that ceramic and rare earth magnets have a low tensile strength when compared to the steel cup shaped rotor of figure 1b.
2. A return path for the magnetic flux between adjacent magnets. The bar magnets could equally well be replaced by a cylindrical "ring" magnet, as shown in figure 2a, with alternate north and south poles around its circumference.

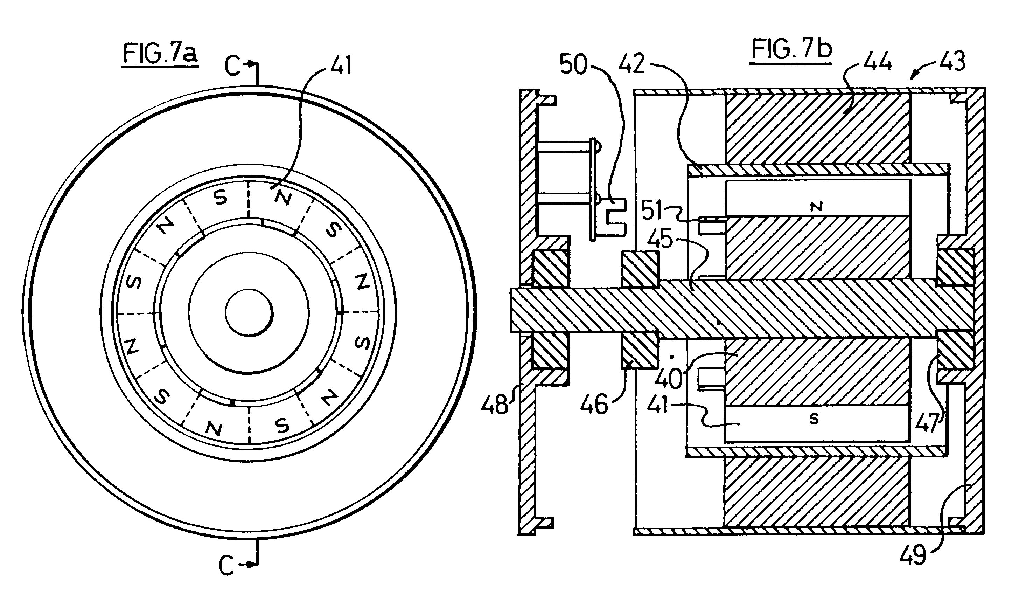

The motor alternator of this invention can also be constructed with the rotor as the inner element and the stator as the outside element, see figures 7a and 7b, but is not as advantageous as the external rotor construction because of the lower maximum rpm that the rotor of figure 7b can sustain due to the low tensile strength of ceramic and rare earth magnets when compared to the steel cup shaped rotor of figure 1b.

The internal rotor construction does have applications in the low to middle speed area as it lends itself to current construction techniques as used to manufacture small induction motors and alternators.

In the following examples, it is most convenient to provide the permanent magnets on the rotor so that electrical connections can be readily made to the wound poles on the stator. Such a construction can be referred to as an ironless stator motor/alternator. Other configurations are possible. For example, if the co-axial iron-less direct current motor construction is controlled by carbon brushes and a commutator, it would then have the magnets stationary (stator) and the windings and commutator turning (rotor) and thus would have an ironless rotor rather than an ironless stator.

If the co-axial iron-less stator direct current motor is controlled by electronic means, the construction would follow, see figure 1 or figure 2, and therefore the magnets would turn (rotor) and windings would be stationary (stator).

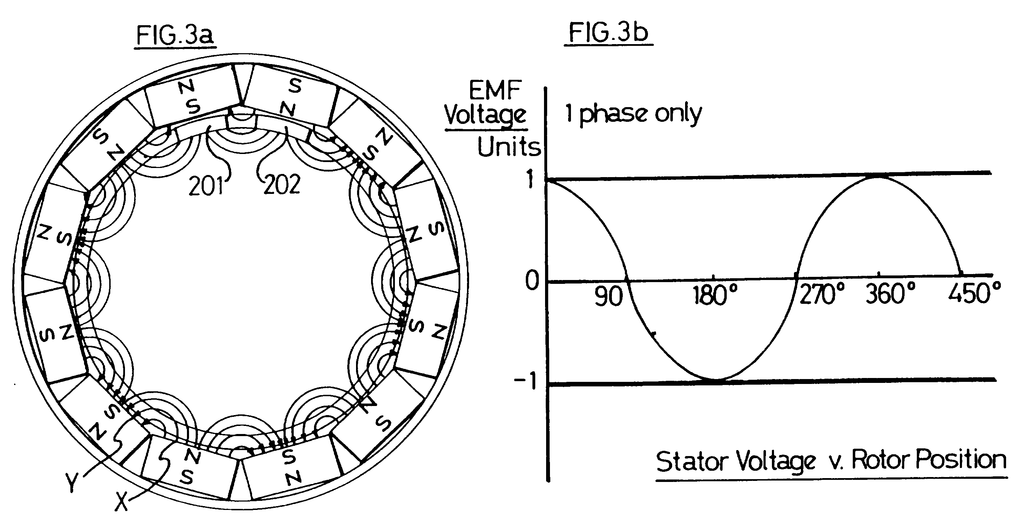

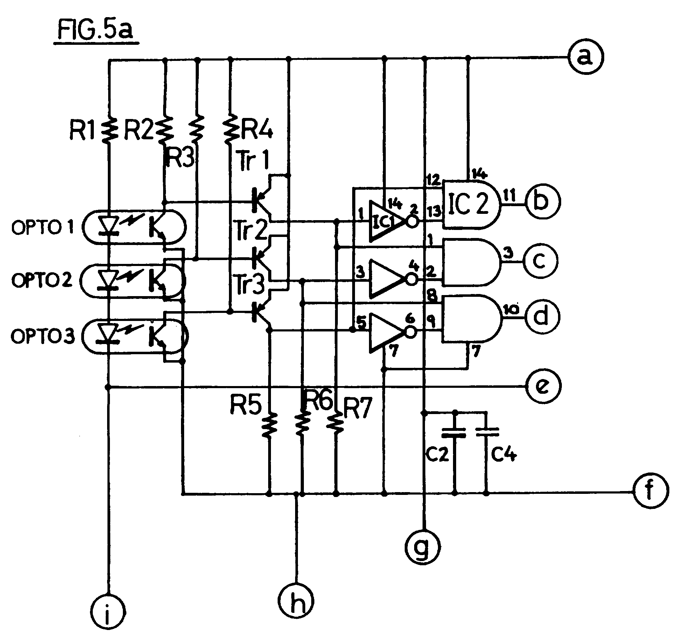

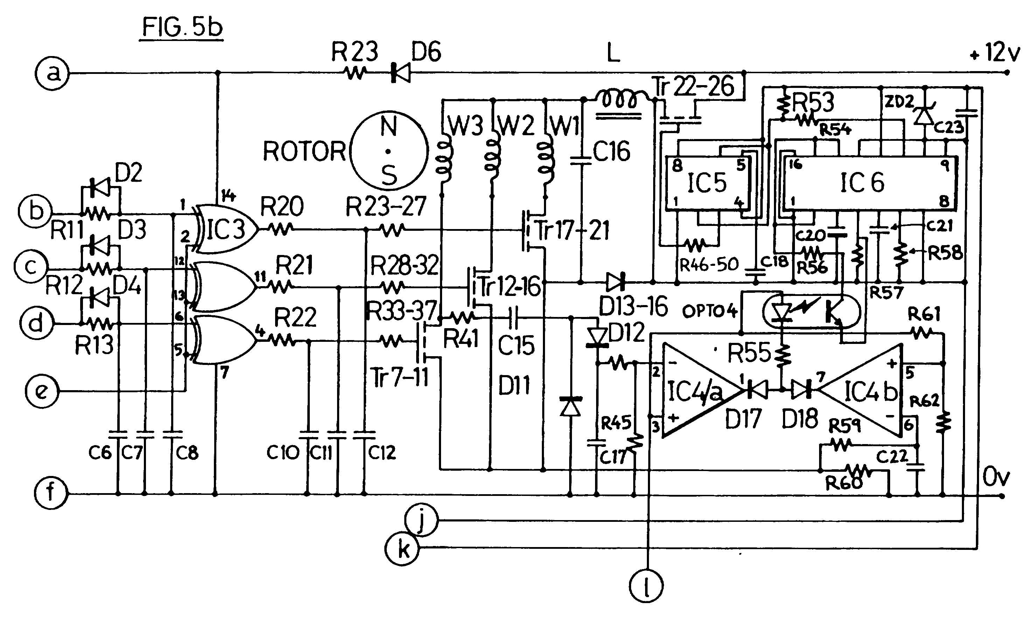

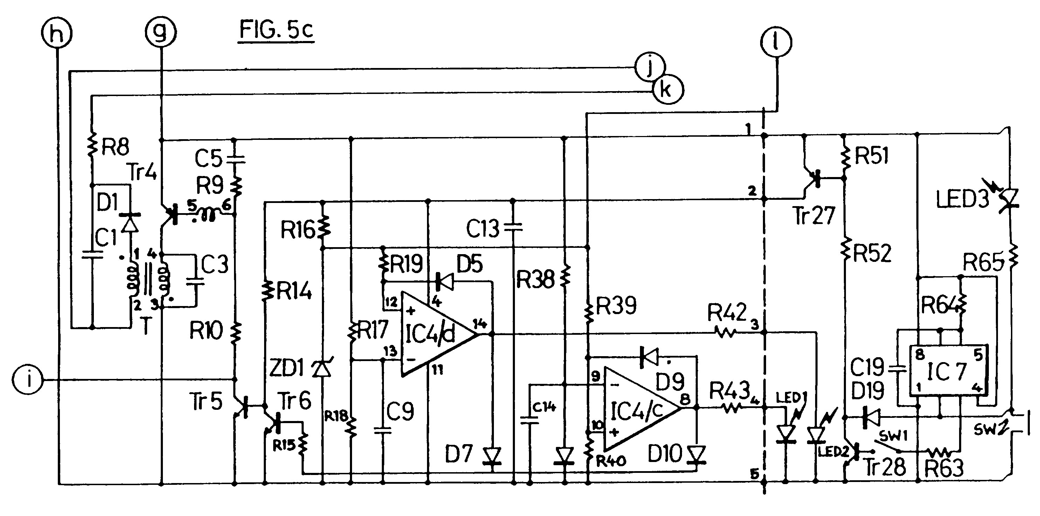

Slotted optical switches have been used in the following examples to accurately sense position of the rotor and control transistors to switch direct current into the three phase stator windings, see figures 3, 4, 5, and 6. The rotor has a series of protrusions, one per magnetic pole pair and 120 degrees electrical to allow sequential current injection into the stator windings. Three optocouplers are used with logic gates to provide drive signals to the transistors, as shown in figure 5a, 5b, 5c. Also non-overlap logic is used, so that only one winding at a time has current flowing in it. Two or more phases could be used if desired, but generally three phases gives optimum efficiency with current conduction of 120 electrical degrees per phase.

## EXAMPLE 1 - FIGURES 1a & 1b

In this example, a co-axial motor or alternator is illustrated, having an external rotor construction utilizing bar magnets. Whether the unit is used as a motor or an alternator will depend upon the application required, and whether or not current is extracted from these from the stator windings, or whether current is supplied to the stator windings to operate the unit as a motor.

Preferably the motor/alternator 10 has a cylindrical sleeve 11 which is conveniently in the form of a cup having an end face 12, which is attached to a central shaft 13. This shaft is preferably mounted within bearings 14, 15 mounted within a stator 16. Conveniently, the shaft has a tapped end 17 for connection to other machinery.

Preferably, the inner face 20 of the sleeve 11 is provided with a plurality of side by side bar magnets 27, aligned with their axes parallel to the axis of the rotor. It will be appreciated that there will be an even number of such closely spaced magnets, so that the polarity of the permanent magnetic poles alternates as one travels around the inner circumference presented by these magnets. [This differs from traditional motor designs where the magnetic poles are widely spaced and there are much longer flux paths through the iron of the stator/core].

The magnets are preferably rare earth or ceramic bar magnets, and 20 such magnets are shown in Figure 1A, for the purpose of illustration. Any even number of such magnets can be used depending upon design criteria such as size, weight, price, availability and frequency. For medium speed machines 12 to 30 poles are preferred, with 20 permanent magnetic poles providing optimum performance for a motor of the type illustrated in figures 1a and 1b.

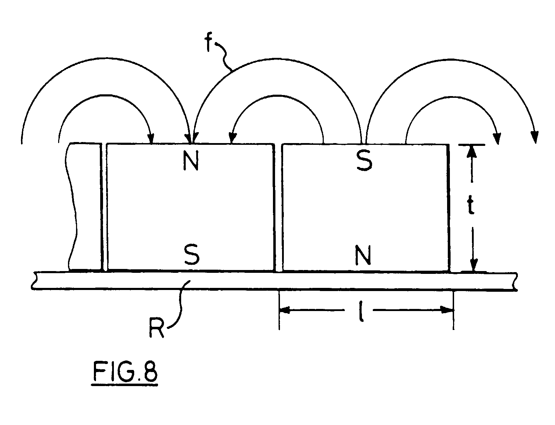

By closely spacing the magnets around the motor circumference, the optimum ratio of magnetic circuit pole length (I) to magnet thickness (t) can be chosen, as shown in figure 8. The free air flux lines are shown as semi-circular whilst the metal rotor R provides a metallic return path for the flux

The maximum length flux lines (f) approximate to semi-circular paths for higher pole numbers, and thus figure 8 approximates to a rotor of an infinitely large radius. The maximum length flux line (f) can be expressed as:

$$2t = pi/2 \times 1$$

Thus

$$t = 0.785 \; 1$$

This relationship applies to strontium ferrite magnets, rare earth magnets such as samarium cobalt and neodymium iron, and also for air cored single or multiple loop superconductor electromagnets.

Preferably the bar magnets are formed from either rare earth or ceramic magnets, and have a high field strength enabling them to provide a higher magnetic flux across a much wider air gap than is possible with conventional magnets, but at the same time it is preferred that the adjacent permanent magnetic poles are close together to provide a short magnetic flux path between adjacent magnetic poles.

Preferably, the rotor sleeve and end face, are formed of steel although other materials could be used.

The stator 16 is preferably connected to a mounting plate 22, which may also support slotted optical switches 23 (only one of which is shown) in order to detect the position of the magnets. The slotted optical switches 23 conveniently detect the position of protrusions 26 on the end face of the sleeve, which protrusions 26 may be associated with magnetic poles of a particular polarity.

It is preferred that the rotor and stator are spaced apart by a relatively large cylindrical air gap 28 of the order of 0.25mm to 1.5mm and preferably 0.75mm for the 20 pole motor/alternator of this example. This enables the wound poles to intersect the magnetic flux path as shown in figure 3a. The air gap is preferably less than the depth of the magnets and should be of such a size as to allow for normal engineering clearances and tolerances.

The stator has an annular generally cylindrical substrate 24 of low magnetic permeability material with a plurality of wound poles 25 on its outer cylindrical surface. A preferred substance is glass reinforced plastics as this can be formed into a sufficiently rigid cylindrical surface which on a prototype machine without a fan has not distorted in use. The number of wound poles correspond to the number of permanent magnetic poles inside the rotor. The wound poles are relatively shallow in that they are formed on or close to the surface of the substrate (unlike conventional wound poles which are wound within slots formed in steel laminations). The depth of the wound poles on or close to the surface of the stator will depend upon the size of the stator and required rating of the motor. In the example shown, the depth would be of the order of 1mm to 10mm, and preferably about 3mm.

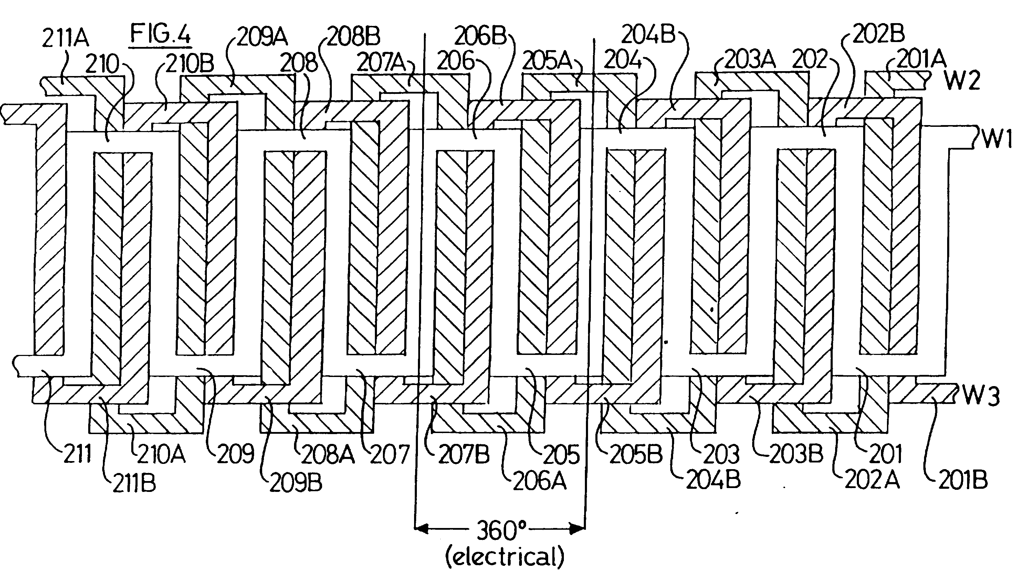

It will be generally convenient to provide the wound poles as wave windings on that surface of the stator facing the permanent magnetic poles. For example figure 4 shows the wave windings W1, W2, W3 each providing a plurality of wound poles 201 - 211, 201A - 211A, and 2018 - 211B on the surface of a substrate for a three phase stator winding as used in the motor/alternator of figures 1a/1b. As will be discussed below a three phase winding is preferred for most applications but other phases have their uses for particular applications. They may be exposed to the air on encapsulated in a plastic resin of low magnetic permeability.

The wound poles may be provided in a variety of forms and may provide for one or more phases. As the substrate is of low magnetic permeability there is consequently no iron (at least in the outer portion of the substrate) to provide a magnet flux path in the stator. The wound poles on the surface of the stator are so positioned as to intersect the magnetic flux lines connecting adjacent ceramic magnets as the flux lines essentially form a series of loops from one magnet to the next as one travels around the inner circumference of the rotor. This is shown in figure 3a which illustrates the relative position of two wound poles say 201 and 202 of wave winding on the surface of the stator and the relatively short magnetic flux paths between adjacent permanent magnetic poles on the rotor which intersect an outer annulus on the stator containing the wound poles.

It is preferred that the average length of the magnetic flux path depicted as a series of semi-circles in Figure 3a (eg from point 'X' to point 'Y') is of the order of 16mm when the air gap between stator and rotor is 0.75mm and the depth of the wound poles is about 3mm. The average magnetic flux path length between adjacent permanent magnetic poles will be shorter than the average flux path length in a conventional synchronous motor where the path length is determined primarily by the size and geometry of the steel laminations surrounding the wound poles

Figure 3b shows the stator voltage for different rotor positions for one phase only of the three phase stator windings of the motor/alternator of figures 1a & 1b.

## ELECTRONIC COMPONENT PARTS LIST - Figure 5a, 5b, 5c

The circuit diagram of Figures 5a, 5b, 5c is shown on three separate sheets for convenience. The letters shown in circles, eg a-k show how the components of Figure 5a connect to the components both of Figure 5b and Figure 5c. For convenience the drawing of Figure 5a should be laid out to the left of the drawing of Figure 5b, and the drawing of Figure 5c should be placed in a position below that of Figures 5a and 5b. These three drawings 5a-5c have the following components.

1. Semiconductors

| D1-D12 | Diode | IN4148 | 75v | 0.2A |
|--------|-------|--------|-----|------|
| D13-D16 | Diode | BYV42 - 50 | 50v | 30A |
| D17-D19 | Diode | IN4148 | 75v | 0.2A |
| ZD1 | Zener Diode | | 5.6v | 1W |
| ZD2 | Zener Diode | | 15v | 1W |

LED1-LED3 Light emitting diode, 3mm, green high efficiency

| Tr1 - Tr4 | Transistor | BC640 | 100v | 1A |
|-----------|-----------|-------|------|-----|
| Tr5 + Tr6 | Transistor | BC639 | 100v | 1A |
| Tr7 - Tr26 | Transistor | BUZ11 | 50v | 30A |
| Tr27 + Tr28 | Transistor | BC639 | 100v | 1A |

| OPTO1-OPTO3 | Slotted Optical Switch | OPB 865 T51 |
|-------------|------------------------|-------------|
| OPTO4 | Optoisolator | 4N25 |
| IC1 | Hex inverter | CD4069 |
| IC2 | Quad And | CD4081 |
| IC3 | Quad Exclusive Or | CD4070 |
| IC4 | Quad Op - amp | LM324 |
| IC5 | Driver | NE555 |
| IC6 | PWM | TL494 |
| IC7 | Timer | TLC555 |

2. Capacitors

| C1 + C2 | 0.1 | micro-farad | 50v |
|---|---|---|---|
| C3 | 0.01 | micro-farad | 50v |
| C4 | 10 | micro-farad | 16v |
| C5 - C8 | 0.01 | micro-farad | 50v |
| C9 - C15 | 0.1 | micro-farad | 50v |
| C16 | 6.8 | micro-farad | 50v |
| C17 - C19 | 0.1 | micro-farad | 50v |
| C20 | 10 | micrc-farad | 16v |
| C21 - C23 | 0.1 | micro-farad | 50v |

3. Resistors

| R1 | 220 | ohms |
|---|---|---|
| R2 - R4 | 1 | kohms |
| R5 - R7 | 10 | kohms |
| R8 | 390 | ohms |
| R9 | 220 | ohms |
| R10 - R15 | 10 | kohms |
| R16 | 560 | ohms |
| R17 | 220 | kohms |
| R18 | 330 | kohms |
| R19 | 10 | kohms |
| R20 - R22 | 1 | kohms |
| R23 - R38 | 10 | kohms |
| R39 | 120 | kohms |
| R40 + R41 | 10 | kohms |
| R42 + R43 | 330 | ohms |
| R44 | 100 | kohms |
| R45 | 100 | kohms |
| R46 - R50 | 56 | ohms |
| R51 - R53 | 10 | kohms |
| R54 | 3.3 | kohms |
| R55 | 1 | kohms |
| R56 + R57 | 10 | kohms |
| R58 | 1.2 | kohms |
| R59 | 10 | kohms |
| R60 | 300 | micro-ohms |
| R61 | 100 | kohms |
| R62 | 560 | ohms |
| R63 | 10 | kohms |
| R64 | 2.2 | M-ohms |
| R65 | 390 | ohms |

4. Transformer

| T | U15 core, | Winding | 1 - 2 | 60 turns |
|---|---|---|---|---|
| | | Winding | 3 - 4 | 40 turns |
| | | Winding | 5 - 6 | 10 turns |

5. Inductor

| L | U25 core, | 4 turns | 3mm | air-gap |

6. <u>Switches</u>

| SW1 | "on" | switch | SPST |
| SW2 | "Power" | switch | Momentary on |

**OPERATION: 12 VOLT DC ELECTRONIC CIRCUIT DIAGRAM - Figures 5a, 5b, 5c**

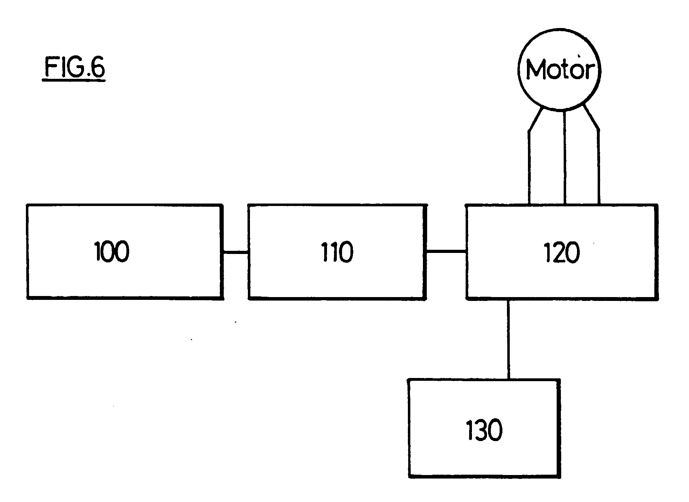

The operation of a three phase motor as shown in figure 1a/1b will now be described with reference to Figures 5a, 5b, 5c and 6. The block diagram of Figure 6 shows the relationship of the following subsystems relative to the motor:

100 - the rotor position sensing means (provided by the slotted optical switches).
110 - pulse width modulation means for starting and speed control.
120 - power transistors and resistive braking means
130 - general control means for
- on/off starting control
- low voltage shut-down
- high temperature shut-down
- motor turning indication.

The rotor position is sensed by the slotted optical switches OPTO1-OPTO3 and this information is converted by logic into three 120 degree non-overlapping signals to control the power transistors. The power transistors Tr17-21, Tr12-16 and Tr7-11 are connected to each of the three phase windings on the stator of the co-axial motor.

When the power transistors Tr17-21 are switched 'on' by the control logic, current flows through winding W1 which magnetically attracts the rotor, which if free to move, turns 120 electrical degrees. After the rotor has turned through 120 electrical degrees, transistors Tr17-21 are switched off and transistors Tr12-16 are switched on. After the rotor has turned a further 120 electrical degrees transistors Tr12-16 are switched off and transistors Tr7-11 are switched on. After the rotor has turned a further 120 electrical degrees transistors Tr7-11 are switched off and transistors Tr17-21 are switched on again completing the cycle.

At starting the input current is only limited by the resistance of the circuit because there is no back EMF voltage produced, as the rotor is stationary. The starting current can be reduced to an acceptable level by using pulse-width modulation techniques (PWM). IC6 is a pulse-width modulation device which can govern the rpm and maximum input current to the motor by varying the pulse width of a series choke DC-DC converter formed by inductor L and Transistors Tr22 - Tr26.

Motor input current limitation is achieved by sensing the voltage drop across resistor R60, which IC6 senses via IC4/b and OPTO4 and limits the pulse-width to provide current limiting.

Motor rpm governing is achieved by rectification of the AC voltage generated in winding W3 and sensing of this voltage by IC6 via IC4/a and OPTO 4 to provide a pulse-width of suitable duty cycle.

Rotor position is sensed by slotted optical switches, OPTO1 - OPTO3 which detect 120° electrical degree protrusions 26 on the rotor. IC1 and IC2 provide non-overlap logic so that only one winding at a time has current flowing in it. Also a time delay in switch-on resistors R11, R12 and R13 and capacitors C6; C7 and C8 provides additional 'dead-time' to allow current flowing in the previous motor winding to reduce to zero before the next winding has current flowing in it.

IC3 provides the logic necessary for th electronic brake. While the motor is switched on the main power transistors Tr7 - Tr21 are turned on and off sequentially under the control of the optical slotted switches OPTO1 - OPTO3. The motor can be switched off by three different means:

1. Switch SW1 turned off under control of the operator.
2. Low battery voltage causes IC4/d to 'latch-up' and turn off the motor.
3. High temperature on the motor windings or main power transistors causes IC4/c to 'latch-up' and turn off the motor.

When the motor is turned off IC3 turns on all the power transistors, on the three motor windings. This applies a short-circuit between all three windings, which stops the motor turning in 1 - 2 seconds, providing a useful braking action for the motor.

As an added safety device IC7 and switch SW2 provide a three second enabling period during which switch SW1 must be operated to allow the motor to start.

## ROTOR POSITION CONTROL

The three phase motor of Figure 1a/1b utilises slotted optical switches to provide rotor position information to control the point of switching of current into the motor windings. Due to the 120 electrical degree conduction angle technique used for this design, there exists other alternatives for accurately sensing rotor position. This is due to the 240 electrical degree period in which the voltage across the motor windings is purely the back EMF voltage generated by the action of the rotor turning.

By differentiating the waveform of winding W2 during the 240 electrical degree non-conducting angle period, it is possible to produce an accurate signal to indicate the point at which current should start to flow in say wound pole 201 of winding W1 and stop flowing in wound pole 201B of winding W3. Also wound pole 201B of winding W3 can indicate the point at which current should start to flow in wound pole 201A of winding W2 and stop flowing in wound pole 201 of winding W1. This applies to all the wound poles of the windings so that in general, winding W1 can indicate the point at which current should start to flow in winding W3 and stop flowing in winding W2. This can be used for accurate stepper motor control by switching the different windings to provide incremental movement.

Another method of determining rotor position from the back EMF of the motor windings is by sensing the crossing points of the three voltage waveforms and using this information to determine when to switch "on" and "off" the appropriate winding.

Magnetic sensors such as Hall Effect devices can be used in place of the optical slotted switches especially in dusty environments where problems with fully enclosing the motor exist.

Also provided with the electronic design are the following features:

(1) Low voltage shut-down, if battery powered then to avoid harmful over-discharge of the battery, the electronics switches off the motor current, if the battery voltage drops below 10.5 volts.
(2) Thermal shut-down, if the windings, or power transistors overheat then the electronics switches off the motor current.
(3) Current limiting to limit torque and starting current.

## EXAMPLE 2 - FIGURES 2a & 2b

This arrangement is similar to that of example 1 except that a single cylindrical ring magnet 30 is provided on the inside of the cup shaped rotor 31. Similar protrusions 32 are provided around the edge of the rotor to identify the positions of the permanent magnetic poles of the ring magnet to a slotted optical switch as shown in figure 1b. The stator (not shown) can be the same as that of figure 1b.

## EXAMPLE 3 - FIGURES 7a & 7b

This arrangement has a single cylindrical ring magnet 41 on an internal rotor 40, i.e. the permanent magnetic poles are on the outer face of the rotor 40, and are surrounded by the wound poles 42 on the inner cylindrical face of the stator 43. The wound poles 42 are provided on a low-magnetic substrate 44 forming part of the stator. The rotor is mounted on shaft 45 which is mounted in bearings 46, 47 in end plates 48, 49. End plate 48 has an internal slotted optical switch 50 which detects the position of protrusions 51 on the edge of the rotor.

## ADVANTAGES OF THE PREFERRED MACHINES OF THIS INVENTION

1. As there are no steel laminations used in the stator, there are no 'eddy-current' and hysteresis frictional losses. This allows for higher efficiency at part or low loading of the machine.
2. As there are no steel laminations used in the stator, there is no saliency "break-out" torque normally associated with permanent magnet machines. This is important in areas where low-speed torque is low and might not be sufficient to allow the machine to start.
3. Very low self inductance of the stator windings due to the large air-gap between alternate magnet poles allows good output regulation of voltage if rpm held constant. This also allows very simple control by transistors in the motor application.
4. Very high power to weight ratio when compared to equivalent induction motors and "universal" brush motor and gives a definite weight saving (as there is no iron in the stator).

5. Electronic control allows a reduction of starting current to any desired level; existing electric motors generally draw five to ten times their normal rated current during starting.

**DIFFERENT PHASES**

In the above examples a three phase motor/alternator is described but other phase windings may be used, and in particular 1,2 and 4 phase configurations will now be described.

**SINGLE PHASE CO-AXIAL MOTORS/ALTERNATORS**

1. Single phase co-axial alternators are the most simple configuration of stator for this machine and can find uses where simplicity of construction outweighs absolute output power. The three phase equivalent produces twice the output power for the same resistive losses, and 50 per cent additional copper in the stator windings.

2. Single phase co-axial motors are the most simple configuration of stator for this machine, but required some means of starting (similar to single phase induction motors) and therefore require an additional winding or mechanical means to ensure starting. In areas of low starting torque requirements i.e. direct coupled fans there could be a use for single phase motors.

**TWO PHASE CO-AXIAL MOTORS/ALTERNATORS**

1. Two Phase Co-axial Alternators. This machine provides a 40% increase in output power for the same resistive losses of a single phase machine.

2. Two Phase Co-Axial Motors. Due to two phase operation there are no starting problems, but if the machine is to be electronically controlled from a direct current supply then efficiency could be low if 180 degree current injection is used. The two phase motor could be electronically controlled to provide the 180 degree current injection just for starting and reduce to 120 degrees or less for normal running operation.

**THREE PHASE CO-AXIAL MOTORS/ALTERNATORS**

1. Three Phase Co-axial Alternators. This machine provides an increase in output power for the same resistive losses as a single or double phase machine. If the three phase machine uses the same amount of copper as a two phase machine and the stator windings of both machines occupy the full 360° available, then the three phase machine can produce a further 7% output power over the two phase machine for the same resistive losses (ie 47% increase over the single phase machine).

2. Three Phase Co-Axial Motors. Due to three phase operation there are no starting problems, and the machine can easily be electronically controlled from a direct current supply as described with reference to figure 6. Due to the 120 degree split with three phase operation sufficient back EMF voltage exists over the 120 degrees to provide efficient current injection from a direct current supply, and this design allows for accurate control of the rotor position, e.g. for a stepper motor.

**GREATER THAN THREE PHASE CO-AXIAL MOTORS/ALTERNATORS**

1. Co-axial Motors. Slightly higher efficiency possible due to possible smaller current injection angle. The four phase motor has possible applications, due to simplicity of electronically controlled reversing of rotor direction while still only requiring two slotted optical switches to sense rotor position.

2. Co-axial Alternators. No additional benefits other than a slightly higher efficiency and lower ripple voltage if the output of the alternator is being rectified to provide a direct current power supply.

**VARIATIONS**

In all of these examples the wound poles are formed on one or the other of the rotor or the stator and the permanent magnetic poles are provided on the remaining one of the etator or the rotor. However it in possible to provide other configurations, e.g. the rotor may be provided with a band of permanent magnetic poles then a band of wound poles (which may be repeated along its length) and the stator is provided with the opposite configuration so that a band of wound poles on the stator face the band of permanent magnetic poles on the rotor, and a band of permanent magnetic poles on the stator face the band of wound poles on the rotor.

The absence of iron in the substrate adjacent the gap and the plurality of permanent magnetic poles allows the flux path from pole to adjacent pole to be relatively shallow so that a composite motor or composite generator/alternator could be built up with a cylindrical stator within an annular cylindrical rotor which in turn is within an annular cylindrical stator (etc.).

The closely spaced permanent magnetic poles can be provided by a single ring magnet (in which case the poles are contiguous) or by separate magnets which touch one another as in Figure 1a, or are separated from one another by a small gap to allow for engineering tolerances (or thermal expansion). Such a gap would generally be less than 2% of the width 1 of the magnet as shown in Figure 8. For very large motors in which the magnets may be 150mm in width the gap would be of the order of 3mm.

The number of permanent magnetic poles will be chosen to suit the particular application of the motor and in particular the required maximum speed of the motor. Between 4 and 30 poles are preferred, the lower pole numbers being suited to small high speed machines, with the higher pole numbers being suited to medium speed and larger machines. In general, the estimated maximum motor speed (s) in revolutions per minute (rpm) can be determined from the formula

$$s = \frac{3000 \times 60}{n}$$

where n = number of pole pairs
Thus for a 4 pole machine ( ie 2 pole pairs) the maximum speed
s = 90,000 rpm
but for 30 poles ( ie 15 pole pairs) the speed drops to:
s = 12,000 rpm.

## Claims

1. A brushless permanent magnet rotary dynamo electric machine (10) including: at least one generally cylindrical stator (16) and at least one generally cylindrical rotor (11) rotatable about an axis (13) and having a generally cylindrical surface (20) facing said generally cylindrical stator (16) and spaced apart therefrom by a generally cylindrical gap (28), a plurality of permanent magnetic poles (27) in the form of bands parallel to the rotational axis (13) on said surface of the rotor and positioned adjacent said generally cylindrical gap (28), said stator having a plurality of wound poles (25) on or in a substrate (24) of the stator, the majority of said wound poles (25) being positioned on or in that surface of the stator which faces said rotor so that the wound poles (25) are adjacent said cylindrical gap (28) and at least said majority of the wound poles (25) being positioned substantially parallel to the rotational axis (13) of the rotor,
whereby at least the outer portion of the stator (16) does not contain any ferromagnetic material, and the flux paths owing to said rotor magnetic poles (27) extend in a region intersected by said majority of said wound poles (25), said region and the substrate (24) of the stator having both a low relative magnetic permeability and being substantially non-conducting, so that the flux paths do not pass through any ferromagnetic material in the stator, characterised in that the permanent magnetic poles (27) are closely spaced around the generally cylindrical circumference of the rotor surface such that the magnetic flux paths are relatively short substantially semi-circular magnetic flux paths between circumferentially adjacent permanent magnetic poles (27), whereby said majority of sdid wound poles (25) intersect substantially all of the magnetic flux paths substantially at right angles thereto.

2. A brushless permanent magnet rotary dynamo electric machine (10) as claimed in claim 1, characterised in that there are between 4 and 30 closely spaced permanent magnetic poles (27) positioned substantially evenly around the circumference of the rotor (11).

3. A brushless permanent magnet rotary dynamo electric machine (10) as claimed in claim 2, characterised in that there are about 20 permanent magnetic poles (27) positioned evenly around the circumference of the rotor (11).

4. A brushless permanent magnet rotary dynamo electric machine (10) as claimed in claim 2 or claim 3, characterised in that the substrate (24) has a relative magnetic permeability of less than 20 (relative to air).

5. A brushless permanent magnet rotary dynamo electric machine (10) as claimed in claim 1, characterised in that the permanent magnetic poles (27) are provided by a plurality of high strength bar magnets, mounted adjacent one another with their principal axes parallel to the axis (13) of the said rotor (11).

6. A brushless permanent magnet rotary dynamo electric machine (10) as claimed in claim 1, characterised in that the permanent magnetic poles (27) are provided by a single ceramic ring magnet (30), which is magnetized in such a way that the ring (30) has regions of alternate magnetic polarity.

7.  A brushless permanent magnet rotary dynamo electric machine (10) as claimed in claim 1, characterised in that the at least one rotor (11) is an external rotor (11, 31) with the permanent magnetic poles (27) on the internal cylindrical surface of the rotor.

8.  A brushless permanent magnet rotary dynamo electric machine (10) as claimed in claim 7, characterised in that the at least one external rotor (11) is cup-shaped (12) and is formed of a material having a higher tensile strength than the tensile strength of the material containing the permanent magnetic poles (27).

9.  A brushless permanent magnet rotary dynamo electric machine (10) as claimed in claim 1, characterised in that at least one rotor (11) is an internal rotor (40).

10. A brushless permanent magnet rotary dynamo electric machine (10) as claimed in claim 8 or claim 9, characterised in that the machine has means for sensing the position of the rotor (100), and switching means (Tr17-21, Tr12-16, Tr7-11) for connecting an electrical power source sequentially to the or each phase of a winding (W1, W2, W3) forming the wound poles (25) of the stator.

11. A brushless permanent magnet rotary dynamo electric machine (10) as claimed in claim 10, characterised in that the switching means comprises one power electronic switching device (Tr17-21, Tr12-16, Tr7-11) for each phase of the winding, the or each device being capable of being "switched-on" by a respective control signal responsive to the means for sensing (100) the rotor position.

12. A brushless permanent magnet rotary dynamo electric machine (10)as claimed in claim 11, characterised in that the machine is a three-phase machine having three sets of windings (W1, W2, W3) separated by 120 electrical degrees, and the means for sensing the rotor position has means for sensing three positions, each position being separated from the next position by 120 electrical degrees.

13. A brushless permanent magnet rotary dynamo electric machine (10) as claimed in claim 12, and characterised in that the machine has pulse width modulation means (110) to control the speed of the machine.

14. A brushless permanent magnet rotary dynamo electric machine (10) as claimed in claim 13, and further including a brake for the machine, characterised in that the brake includes means for providing electrical braking (120) of the machine.

15. A brushless permanent magnet rotary dynamo electric machine (10) as claimed in claim 14, characterised in that the machine includes means for "switching-off" the machine in response to detection of too low an applied voltage.

16. A brushless permanent magnet rotary dynamo electric machine (10) as claimed in claim 15, characterised in that the machine includes means for "switching-off" (130) the machine in response to overheating.

17. A brushless permanent magnet rotary dynamo electric machine (10) as claimed in claim 8 or claim 9, characterised in that the means for sensing the rotor position includes slotted optical switches (OPTO1-OPTO2)

## Patentansprüche

1.  Eine bürstenlose dauermagnetische rotierende dynamoelektrische Maschine (10) bestehend aus:

    wenigstens einem im allgemeinen zylindrischen Stator (16) und wenigstens einem im allgemeinen zylindrischen Rotor (11), welcher um eine Achse (13) drehbar angeordnet ist und im allgemeinen eine zylindrische Oberfläche (20) aufweist, welche dem genannten, im allgemeinen zylindrischen Stator (16) gegenüber angeordnet ist und von diesem durch einen im allgemeinen zylindrischen Luftspalt (28) getrennt ist;
    einer Vielzahl dauermagnetischer Pole (27), angeordnet in Form von Bändern, parallel zur Rotationsachse (13) auf der genannten Oberfläche des Rotors und benachbart zu dem genannten im allgemeinen zylindrischen Luftspalt (28), wobei der genannte Stator eine Vielzahl gewickelter Pole (25) aufweist, welche auf oder in einem Substrat (24) des Stators angeordnet sind, und die Mehrheit der genannten gewickelten Pole (25) so auf oder in der Oberfläche des Stators, welche dem genannten Rotor gegenüberliegt, angeordnet ist, daß die gewickelten Pole (25) zu dem genannten zylindrischen Luftspalt (28) benachbart sind und wenigstens die genannte Mehrheit von gewickelten Pole (25) im wesentlichen parallel zur Rotationsachse (13) des Rotors angeordnet ist, wodurch wenigstens der äussere Teil des Stators (16) keinen ferromagnetischen Stoff enthält und die Wege für den Magnetfluß, aufgrund der genannten magnetischen Pole (27) auf einen Bereich erstrekken, welcher durch die genannte Mehrheit der genannten gewickelten Pole (25) geschnitten wird, wobei der genannte Bereich und das Substrat (24) des Stators eine niedrige relative magnetische Permeabilität aufweisen und im wesentlichen nicht leitfähig sind, so daß die Flusswege nicht durch ferromagnetischen Stoff in dem Stator gehen, **dadurch gekennzeichnet,** daß die dauermagnetischen Pole (27) in kurzen Abständen um den im allgemeinen zylindrischen Umfang der Oberfläche des Rotors angeordnet sind, derart, daß verhältnismässig kurze im wesentlichen halbkreisförmige Wege für den Magnetfluß zwischen den auf dem Umfang benachbarten dauermagnetischen Polen (27) vorhanden sind, wobei die genannte Mehrheit der genannten gewickelten Pole (25) im wesentlichen alle Wege des magnetischen Flusses unter im wesentlichen rechtem Winkel schneidet.

2. Eine bürstenlose dauermagnetische rotierende dynamoelektrische Maschine (10) nach Anspruch 1, **dadurch gekennzeichnet**, daß zwischen 4 und 30 in kurzem Abstand voneinander angeordnete dauermagnetische Pole (27) im wesentlichen gleichmäßig um den Umfang des Rotors (11) angeordnet sind.

3. Eine bürstenlose dauermagnetische rotierende dynamoelektrische Maschine (10) nach Anspruch 2, **dadurch gekennzeichnet,** daß ungefähr 20 dauermagnetische Pole (27) gleichmäßig um den Umfang des Rotors (11) angeordnet sind.

4. Eine bürstenlose dauermagnetische rotierende dynamoelektrische Maschine (10) nach Anspruch 2 oder Anspruch 3, **dadurch gekennzeichnet**, daß das Substrat (24) eine relative magnetische Permeabilität aufweist, welche kleiner als 20 ist ( im Verhältnis zu Luft).

5. Eine bürstenlose dauermagnetische rotierende dynamoelektrische Maschine (10) nach Anspruch 1, **dadurch gekennzeichnet**, daß die dauermagnetischen Pole (27) durch eine Vielzahl von Stabmagneten (27) mit hoher Feldstärke gebildet werden, welche benachbart zueinander mit ihren Hauptachsen parallel zu der Achse (13) des genannten Rotors (11) angeordnet sind.

6. Eine bürstenlose dauermagnetische rotierende dynamoelektrische Maschine (10) nach Anspruch 1, **dadurch gekennzeichnet,** daß die dauermagnetischen Pole (27) durch einen einzigen keramischen Ringmagneten (30) gebildet werden, welcher auf eine derartige Weise magnetisiert ist, daß der Ring (30) Bereiche wechselnder magnetischer Polarität aufweist.

7. Eine bürstenlose dauermagnetische rotierende dynamoelektrische Maschine (10) nach Anspruch 1, **dadurch gekennzeichnet**, daß der wenigstens eine Rotor (11) ein äußerer Rotor (11,31) ist, mit den dauermagnetischen Polen auf der inneren zylindrischen Oberfläche des Rotors.

8. Eine bürstenlose, dauermagnetische, rotierende, dynamoelektrische Maschine (10) nach Anspruch 7, **dadurch gekennzeichnet**, daß der wenigstens eine äußerer Rotor (11) becherförmig (12) geformt ist, und aus einem Material hergestellt ist, welches eine Zugfestigkeit hat, die höher ist als die Zugfestigkeit des Materials, in welchem die dauermagnetischen Pole (27) eingebettet sind.

9. Eine bürstenlose dauermagnetische rotierende dynamoelektrische Maschine (10) nach Anspruch 1, **dadurch gekennzeichnet**, daß der wenigstens eine Rotor (11) ein innenliegender Rotor (40) ist.

10. Eine bürstenlose dauermagnetische rotierende dynamoelektrische Maschine (10) nach Anspruch 8 oder Anspruch 9, **dadurch gekennzeichnet**, daß die Maschine Mittel (100) zum Erfassen der Position des Rotors aufweist und Schaltmittel (Tr17-21, Tr12-16, Tr7-11) besitzt, um eine elektrische Leistungsquelle sequentiell mit der oder jeder Phase einer Wicklung (W1, W2, W3), welche die gewickelten Pole (25) des Stators bildet, zu verbinden.

11. Eine bürstenlose dauermagnetische rotierende dynamoelektrische Maschine (10) nach Anspruch 10, **dadurch gekennzeichnet,** daß das Schaltmittel für jede Phase der Wicklung eine leistungselektronische Schaltvorrichtung (Tr17-21, Tr12-16, Tr7-11) besitzt, wobei die oder jede Vorrichtung in der Lage ist durch ein entsprechendes Steuersignal in Abhängigkeit von dem Mittel (100) zur Erfassung der Rotorstellung, "eingeschaltet" zu werden.

**12.** Eine bürstenlose dauermagnetische rotierende dynamoelektrische Maschine (10) nach Anspruch 11, **dadurch gekennzeichnet,** daß die Maschine eine dreiphasige Maschine ist, die drei Wicklungssätze (W1, W2, W3) aufweist, welche um 120° verschoben sind und daß das Mittel zur Erfassung der Rotorstellung, Mittel für die Erfassung von drei Positionen besitzt, wobei jede Position von der nächsten Position um 120° verschoben ist.

**13.** Eine bürstenlose dauermagnetische rotierende dynamoelektrische Maschine (10) nach Anspruch 12, **dadurch gekennzeichnet**, daß die Maschine zur Regelung der Maschinengeschwindigkeit ein Mittel (110) zur Pulsbreitenmodulation aufweist.

**14.** Eine bürstenlose dauermagnetische rotierende dynamoelektrische Maschine (10) nach Anspruch 13, darüberhinaus bestehend aus einer Bremse für die Maschine, **dadurch gekennzeichnet,** daß die Bremse Mittel (120) zur elektrischen Abbremsung der Maschine aufweist.

**15.** Eine bürstenlose dauermagnetische rotierende dynamoelektrische Maschine (10) nach Anspruch 14, **dadurch gekennzeichnet**, daß die Maschine ein Mittel zum "Abschalten" der Maschine aufweist, welches bei zu niedriger Versorgungsspannung anspricht.

**16.** Eine bürstenlose dauermagnetische rotierende dynamoelektrische Maschine (10) nach Anspruch 15, **dadurch gekennzeichnet**, daß die Maschine ein Mittel (130) zum "Abschalten" der Maschine aufweist, welches bei Überhitzung anspricht.

**17.** Eine bürstenlose dauermagnetische rotierende dynamoelektrische Maschine (10) nach Anspruch 8 oder Anspruch 9, **dadurch gekennzeichnet**, daß das Mittel zur Erfassung der Rotorstellung geschlitzte optische Schalter (OPT01-OPT02) aufweist.

## Revendications

**1.** Machine électrique à dynamo rotative et à aimants permanents sans balais (10) qui comprend: au moins un stator généralement cylindrique (16) et au moins un rotor généralement cylindrique (11) pouvant tourner autour d'un axe (13) et ayant une surface généralement cylindrique (20) faisant face audit stator généralement cylindrique (16) et écarté de ce dernier par un espace généralement cylindrique (28); une pluralité de pôles magnétiques permanents (27) sous forme de bandes parallèles à l'axe de rotation (13) sur ladite surface du rotor et positionnées adjacentes à l'espace généralement cylindrique (28), ledit stator ayant une pluralité de pôles bobinés (25) situés sur ou dans un substrat (24) du stator, et la majorité desdits pôles bobinés (25) étant positionnés sur ou dans la surface du stator qui fait face audit rotor de sorte que les pôles bobinés (25) sont adjacents audit espace cylindrique (28) et que, au moins ladite majorité des pôles bobinés (25) sont positionnés approximativement parallèles à l'axe de rotation (13) du rotor et donnant lieu à ce qu'au moins la partie extérieure du stator (16) ne contient pas de matériau ferromagnétique et, à cause desdits pôles magnétiques du rotor (27), les chemins de flux s'étendent dans une zone entrecoupée par ladite majorité desdits pôles bobinés (25), ladite zone et le substrat (24) du stator ayant une perméabilité magnétique relative faible et étant essentiellement non conducteurs, les chemins de flux ne passent pas à travers du matériau ferromagnétique dans le stator, CARACTERISE EN CE QUE les pôles à aimant permanent (27) sont espacés de façon serrée autour de la circonférence généralement cylindrique de la surface du rotor de manière à créer des chemins de flux magnétique approximativement courts et essentiellement semi-circulaires entre des pôles à aimant permanent (27) situés contigus l'un à l'autre sur la circonférence, de sorte que ladite majorité desdits pôles bobinés (25) entrecoupent essentiellement tous les chemins de flux magnétique sous un angle approximativement droit.

**2.** Machine électrique à dynamo rotative et à aimants permanents sans balais (10) selon la revendication 1, CARACTERISE EN CE QU'il y a entre 4 et 30 pôles magnétiques permanents (27) espacés de façon serrée et positionés à des intervalles réguliers autour de la circonférence du rotor (11).

**3.** Machine électrique à dynamo rotative et à aimants permanents sans balais (10) selon la revendication 2, CARACTERISE EN CE QU'il y a environ 20 pôles magnétiques (27) positionnés à des intervalles réguliers autour de la circonférence du rotor (11).

**4.** Machine électrique à dynamo rotative et à aimants permanents sans balais (10) selon la revendication 2 ou la revendication 3, CARACTERISE EN CE QUE le substrat (24) a une perméabilité magnétique relative de moins de 20 (par rapport à celle de l'air).

**5.** Machine électrique à dynamo rotative et à aimants permanents sans balais (10) selon la revendication 1, CARACTERISE EN CE QUE les pôles magnétiques permanents (27) sont constitués par une pluralité de barreaux aimantés d'intensité élevée, montés tout près l'un de l'autre, leurs axes principaux étant parallèles à l'axe (13) dudit rotor (11).

**6.** Machine électrique à dynamo rotative et à aimants permanents sans balais (10) selon la revendication 1, CARACTERISE EN CE QUE les pôles magnétiques permanents (27) sont constitués par un aimant annulaire céramique unique (30), magnétisé de telle manière que l'anneau (30) comporte des zones de polarité magnétique alternée.

**7.** Machine électrique à dynamo rotative et à aimants permanents sans balais (10) selon la revendication 1, CARACTERISE EN CE QUE le rotor (11) est un rotor externe (11, 31), les pôles magnétiques permanents (27) étant situés sur la surface cylindrique interne du rotor.

**8.** Machine électrique à dynamo rotative et à aimants permanents sans balais (10) selon la revendication 7, CARACTERISE EN CE QUE le rotor externe (11) est en forme de coupe (12) et fait en un matériau ayant une résistance à la traction plus élevée que celle du matériau qui entoure les pôles magnétiques permanents (27).

**9.** Machine électrique à dynamo rotative et à aimants permanents sans balais (10) selon la revendication 1, CARACTERISE EN CE QU'au moins le rotor unique (11) est un rotor interne (40).

**10.** Machine électrique à dynamo rotative et à aimants permanents sans balais (10) selon la revendication 8 ou la revendication 9, CARACTERISE EN CE QUE la machine est équipée d'un moyen de détection de la position du rotor (100), ainsi que d'un moyen de commutation (Tr 17-21, Tr 12-16, Tr 7-11) permettant de brancher une source d'énergie électrique sequentiellement à la phase ou à chaque phase d'un bobinage (W2, W2, W3) constituant les pôles bobinés (25) du stator.

**11.** Machine électrique à dynamo rotative et à aimants permanents sans balais (10) selon la revendication 10, CARACTERISE EN CE QUE le moyen de commutation comprend un dispositif d'energie de commutation électronique (Tr 17-21, Tr 12-16, Tr 7-11) pour chaque phase du bobinage, le ou chaque dispositif étant capable d'être amorcé par un signal de commande sensible au moyen de détection (100) de la position du rotor.

**12.** Machine électrique à dynamo rotative et à aimants permanents sans balais (10) selon la revendication 11, CARACTERISE EN CE QUE la machine est une machine triphasée ayant trois jeux de bobinages (W1, W2, W3) séparés par 120 degrés électriques et que le moyen de détection de la position du rotor comprend un moyen de détection de trois positions, chaque position étant séparée de la position suivante par 120 degrés électriques.

**13.** Machine électrique à dynamo rotative et à aimants permanents sans balais (10) selon la revendication 12, CARACTERISE EN CE QUE la machine est équipée d'un moyen de modulation de durée d'impulsion pour contrôler la vitesse de rotation de la machine.

**14.** Machine électrique à dynamo rotative et à aimants permanents sans balais (10) selon la revendication 13 et comprenant en plus un frein, CARACTERISE EN CE QUE le frein comporte un moyen de freinage électrique (120) de la machine.

**15.** Machine électrique à dynamo rotative et à aimants permanents sans balais (10) selon la revendication 14, CARACTERISE EN CE QUE la machine est dotée d'un moyen de mise en arrêt de la machine en réponse à la détection de l'application d'une tension trop basse.

**16.** Machine électrique à dynamo rotative et à aimants permanents sans balais (10) selon la revendication 15, CARACTERISE EN CE QUE la machine est dotée d'un moyen de mise en arrêt de la machine en cas de surchauffement.

**17.** Machine électrique à dynamo rotative et à aimants permanents sans balais (10) selon la revendication 8 ou la revendication 9, CARACTERISE EN CE QUE le moyen de détection de la position du rotor comprend des commutateurs optiques à rainures (OPTO1 - OPTO2).

FIG. 1b

FIG. 1a

FIG. 2b

FIG. 2a

FIG.3a

201  202

Y
X

FIG.3b

EMF
Voltage
Units

1 phase only

1

0      90      180°      270°  360°      450°

-1

Stator Voltage v. Rotor Position

EP 0 368 930 B2

FIG.4

360° (electrical)

EP 0 368 930 B2

FIG.5a

EP 0 368 930 B2

FIG.5b

FIG. 5c

EP 0 368 930 B2

FIG.6

FIG.7a

FIG.7b

EP 0 368 930 B2

FIG.8